# EUROPEAN PATENT SPECIFICATION

(11) **EP 4 512 639 B1**
(45) Date of publication and mention of the grant of the patent: **25.02.2026**
(21) Application number: 24192059.4
(22) Date of filing: 31.07.2024
(51) Int. Cl.: B60C 15/00, B60C 15/06

(54) **PNEUMATIC TIRE**
LUFTREIFEN
PNEUMATIQUE

(30) Priority: 23.08.2023 JP 2023135711; 18.06.2024 JP 2024098279
(43) Date of publication of application: 26.02.2025
(73) Proprietor: Sumitomo Rubber Industries, Ltd., Kobe-shi, Hyogo 651-0072 (JP)
(72) Inventor: ISHIGAKI, Yuichi, Kobe-shi, 651-0072 (JP)
(74) Representative: Manitz Finsterwald Patent- und Rechtsanwaltspartnerschaft mbB

(56) References cited:
- EP-A2- 1 095 796
- JP-A- 2022 100 772
- US-A- 3 052 275
- US-A1- 2013 118 669
- US-A1- 2020 331 302

## Description

### BACKGROUND OF THE INVENTION

### Field of the Invention

The present invention relates to a pneumatic tire.

### Background Art

Japanese Laid-Open Patent Publication No. 2022-100772 describes a tire including a carcass formed of one carcass ply. The carcass ply has a ply body portion and a pair of turned-up portions. Ends of the turned-up portions are respectively located inward of ground-contact ends of the tread in an axial direction. Such a tire achieves weight reduction.

In recent years, pneumatic tires have been required to achieve weight reduction while maintaining durability.
US 2013/0118669 A1 discloses a pneumatic tire comprising the features according to the preamble of claim 1.
US 2020/0331302 A1 discloses a pneumatic tire comprising features according to a related technology.
EP 1 095 796 A2 also discloses a pneumatic tire comprising features according to a related technology.

The present invention has been made in view of the above circumstances, and a main object of the present invention is to provide a pneumatic tire capable of achieving weight reduction while maintaining durability.

### SUMMARY OF THE INVENTION

This object is satisfied by a pneumatic tire comprising the features according to claim 1. The pneumatic tire includes a tread portion, a pair of sidewall portions, a pair of bead portions respectively having bead cores, a carcass extending between the pair of bead portions, a belt layer disposed outward of the carcass in a tire radial direction, and reinforcing rubber layers respectively provided at the pair of bead portions. The carcass is a carcass ply which includes a body portion extending between the bead cores of the pair of bead portions, and a pair of turned-up portions respectively turned up around the bead cores from an inner side toward an outer side in a tire axial direction, extending outward in the tire radial direction, and having outer ends. In a tire meridional cross-section in a standardized state where the pneumatic tire is fitted on a standardized rim and inflated to a standardized internal pressure and no load is applied to the pneumatic tire, each of the pair of turned-up portions includes a first portion located between the body portion and the belt layer, a second portion adjacent to each reinforcing rubber layer in the tire axial direction, on an outer side in the tire radial direction with respect to a rim flange of the standardized rim, and a third portion disposed between the first portion and the second portion. A length of the third portion is 0.8 to 1.4 times a sum of a length of the first portion and a length of the second portion.

The pneumatic tire of the present invention has the above-described configuration, and thus can achieve weight reduction while maintaining durability.

### BRIEF DESCRIPTION OF THE DRAWINGS

FIG. 1 is a tire meridional cross-sectional view of the right half of a pneumatic tire according to one embodiment of the present invention;
FIG. 2 is a development of a carcass ply;
FIG. 3 is an enlarged view of a bead portion in FIG. 1;
FIG. 4 is a sectional view taken along a line A-A in FIG. 3; and
FIG. 5 is an enlarged view of the bead portion in FIG. 1.

### DETAILED DESCRIPTION

Hereinafter, an embodiment of the present invention will be described with reference to the drawings.

The drawings contain exaggerated expressions and expressions that differ from the dimensional ratio of the actual structure in order to help the understanding of the present invention. In addition, when there are a plurality of embodiments, the same or common elements are denoted by the same reference characters throughout the description, and the redundant description thereof is omitted.

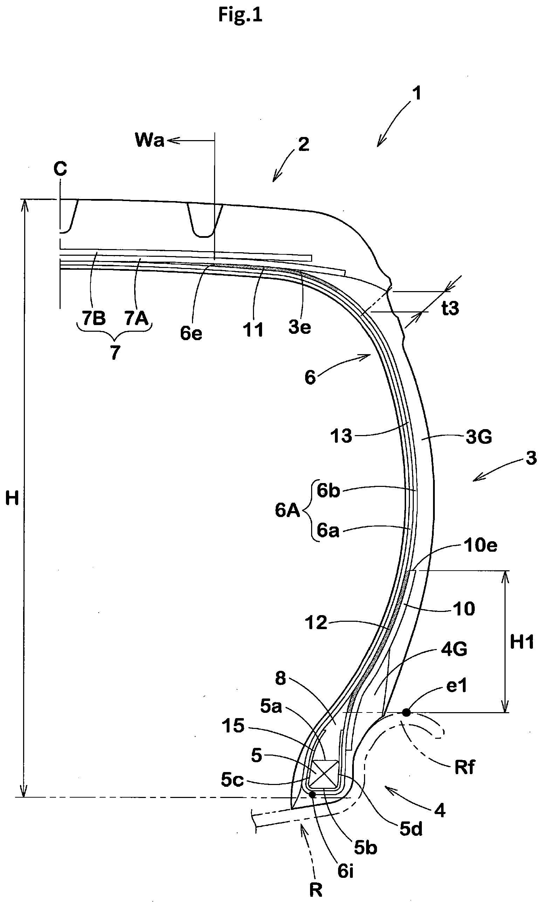

FIG. 1 is a tire meridional cross-sectional view, including a tire rotation axis (not shown), of the right half of a pneumatic tire (hereinafter, may be simply referred to as "tire") 1 according to one embodiment of the present invention. FIG. 1 shows the tire 1 for a passenger car as a preferable mode. The present invention is particularly suitable for a tire to be mounted to a commercial vehicle (e.g., van) designed for high-load applications. However, the present invention may be applied to a tire 1 for a small-sized truck or a heavy-load vehicle, for example.

In the present description, unless otherwise specified, dimensions and the like of components of the tire 1 are values measured in a standardized state. The "standardized state" is a state where the tire 1 is fitted on a standardized rim (hereinafter, may be simply referred to as "rim") R and inflated to a standardized internal pressure and no load is applied to the tire 1.

The "standardized rim R" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The tire 1 of the present embodiment includes a tread portion 2, a pair of sidewall portions 3, and a pair of bead portions 4 respectively having bead cores 5. FIG. 1 shows only one of the sidewall portions 3 and one of the bead portions 4. In the present embodiment, the tire 1 also includes a carcass 6 extending between the pair of bead portions 4, a belt layer 7 disposed outward of the carcass 6 in a tire radial direction, and reinforcing rubber layers 10 respectively provided at the pair of bead portions 4.

The carcass 6 is a carcass ply 6A which includes a body portion 6a extending between the bead cores 5 of the pair of bead portions 4, and a pair of turned-up portions 6b respectively turned up around the bead cores 5 from an inner side toward an outer side in a tire axial direction, extending outward in the tire radial direction, and having outer ends 6e. Thus, the carcass 6 of the present embodiment is formed of one carcass ply 6A, thereby achieving weight reduction.

In the tire meridional cross-section in a standardized state, the pair of turned-up portions 6b include first portions 11, second portions 12, and third portions 13. The first portions 11 are located between the body portion 6a and the belt layer 7. The second portions 12 are adjacent to the reinforcing rubber layers 10 in the tire axial direction, on an outer side in the tire radial direction with respect to rim flanges Rf of the rim R. The third portions 13 are located between the first portions 11 and the second portions 12. The first portions 11 and the second portions 12 are respectively supported by the belt layer 7 and the reinforcing rubber layers 10, and tension that acts on each turned-up portion 6b is alleviated, thereby maintaining durability. In addition, the reinforcing rubber layers 10 serve to keep the carcass ply 6A away from the rim flanges Rf, whereby damage to the carcass ply 6A is inhibited, thereby maintaining durability at a higher level.

Each first portion 11 includes a portion of the turned-up portion 6b that comes into contact with the belt layer 7 when the belt layer 7 is bent on the assumption that, in a case where a rubber material (e.g., sidewall rubber 3G) is disposed between the belt layer 7 and the turned-up portion 6b, no sidewall rubber 3G is provided. In addition, the first portion 11 is specified by a belt ply disposed on an innermost side in the tire radial direction (inner belt ply 7A in the present embodiment), in a case where the belt layer 7 is formed of a plurality of belt plies. In addition, each second portion 12 is formed outward of an outer end e1 in the tire radial direction of each rim flange Rf, in the tire radial direction. For convenience, in FIG. 1, the first portion 11 and the second portion 12 are indicated by hatching.

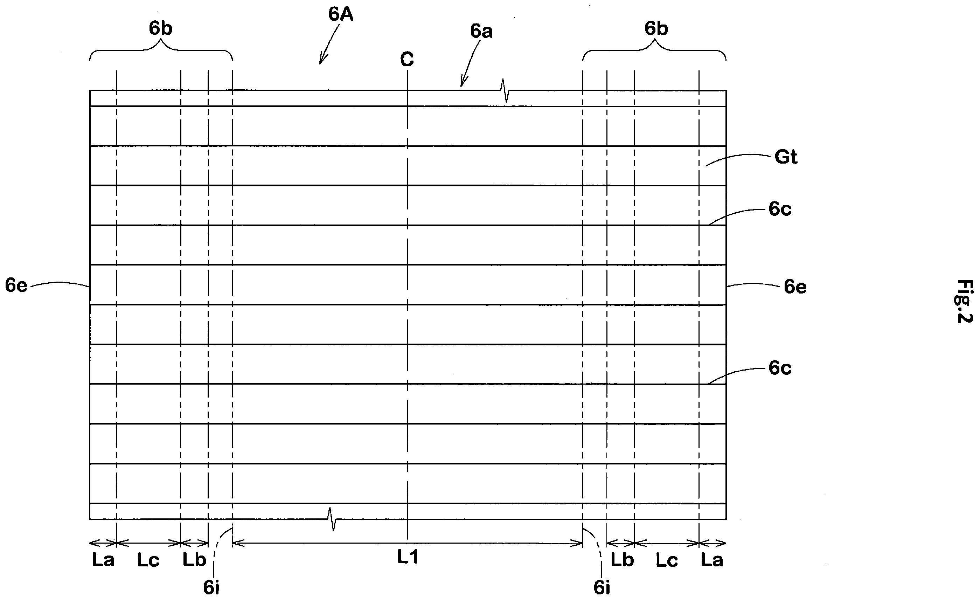

FIG. 2 is a development of the carcass ply 6A. As shown in FIG. 2, a length Lc of the third portion 13 is preferably not less than 0.8 times and more preferably not less than 0.9 times a sum (La+Lb) of a length La of the first portion 11 and a length Lb of the second portion 12, and is preferably not greater than 1.4 times and more preferably not greater than 1.3 times the sum (La+Lb) of the length La of the first portion 11 and the length Lb of the second portion 12. Since the length Lc of the third portion 13 is not less than 0.8 times the sum (La+Lb), the weight reduction of tire 1 is achieved. In addition, since the length Lc of the third portion 13 is not greater than 1.4 times the sum (La+Lb), the effect that tension is alleviated by the first portion 11 and the second portion 12 is maintained at a high level. Therefore, the tire 1 of the present invention can achieve weight reduction while maintaining durability. Such an effect effectively contributes to, in particular, the pneumatic tire 1 to be mounted to a commercial vehicle designed for high-load applications.

In general, during running with the tire 1, a relatively large tension acts on the carcass ply 6A at the bead portions 4. Thus, the length Lb of the second portion 12 is preferably greater than the length La of the first portion 11. Although not particularly limited, the length Lb of the second portion 12 is preferably not less than 1.05 times and more preferably not less than 1.08 times the length La of the first portion 11, and is preferably not greater than 1.18 times and more preferably not greater than 1.15 times the length La of the first portion 11.

As shown in FIG. 1, in the present embodiment, the belt layer 7 is formed of two belt plies 7A, 7B which are respectively disposed on an inner side and an outer side in the tire radial direction. The inner belt ply 7A, for example, terminates outward of the outer belt ply 7B in the tire axial direction. In the present embodiment, each of the belt plies 7A, 7B has highly elastic belt cords, such as steel cords, inclined at an angle of 15 to 40° relative to a tire equator C, and a topping rubber (not shown) for covering the belt cords. Thus, known cords and rubber may be used as appropriate for the belt plies 7A, 7B.

As shown in FIG. 2, the carcass ply 6A includes a plurality of carcass cords 6c and a topping rubber Gt for covering the carcass cords 6c. Known materials may be used as appropriate for the carcass cords 6c and the topping rubber Gt.

A length Wa (shown in FIG. 1) in the tire axial direction between the outer ends 6e of the pair of turned-up portions 6b is preferably not less than 0.10 times and more preferably not less than 0.15 times a length L1 of the body portion 6a, and is preferably not greater than 0.30 times and more preferably not greater than 0.25 times the length L1 of the body portion 6a. Since the length Wa between the outer ends 6e is not less than 0.10 times the length L1 of the body portion 6a, the weight reduction of the tire 1 is maintained at a high level. Since the length Wa between the outer ends 6e is not greater than 0.30 times the length L1 of the body portion 6a, the effect of supporting the turned-up portions 6b is highly exerted. The length L1 of the body portion 6a is a length between positions 6i (shown in FIG. 1) located on an innermost side in the tire radial direction of the carcass ply 6A. When a plurality of the positions 6i located on the innermost side in the tire radial direction are formed, the length L1 is the length between positions located on the innermost side in the tire radial direction and further on an innermost side in the tire axial direction.

As shown in FIG. 1, in the tire meridional cross-section, each bead core 5 of the present embodiment is formed in a rectangular shape. The bead core 5 includes an outer surface 5a in the tire radial direction, an inner surface 5b in the tire radial direction, an inner-side surface 5c in the tire axial direction, and an outer-side surface 5d in the tire axial direction. The inner-side surface 5c and the outer-side surface 5d are connected to the outer surface 5a and the inner surface 5b. The bead core 5 has a known structure that is formed by winding a nonstretchable bead wire, for example.

In the present embodiment, an outer end 10e in the tire radial direction of each reinforcing rubber layer 10 is preferably located outward of the outer end e1 of each rim flange Rf in the tire radial direction. With such reinforcing rubber layers 10, deflection of the bead portion 4 is inhibited from being generated during running, and damage to the carcass ply 6A can be further suppressed. In addition, deflection of the bead portion 4 is inhibited, whereby separation of tire components can be suppressed. Although not particularly limited, a distance H1 in the tire radial direction between the outer end 10e of the reinforcing rubber layer 10 and the outer end e1 of the rim flange Rf is preferably not less than 15% and more preferably not less than 20% of a tire cross-sectional height H, and is preferably not greater than 35% and more preferably not greater than 30% of the tire cross-sectional height H. In the present description, the "tire cross-sectional height H" is a distance in the tire radial direction from a bead base line BL to an outermost-side position in the tire radial direction. In addition, the "bead base line BL" is a line passing, in the tire axial direction, through a rim diameter (see JATMA) position defined by the standard on which the tire 1 is based.

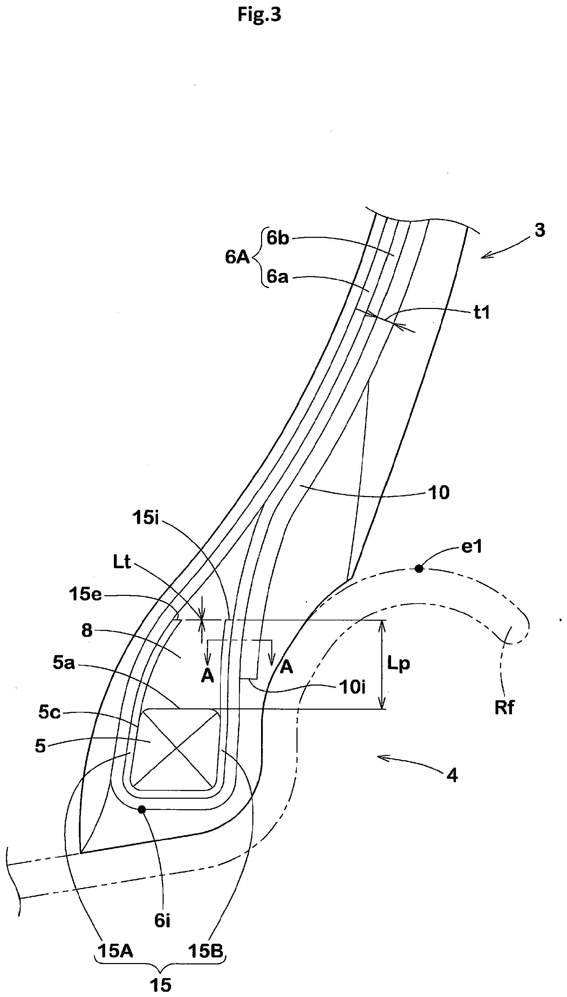

FIG. 3 is an enlarged view of the bead portion 4 in FIG. 1. As shown in FIG. 1 and FIG. 3, an inner end 10i in the tire radial direction of each reinforcing rubber layer 10 is preferably located outward of the outer surface 5a in the tire radial direction of each bead core 5, in the tire radial direction. Such reinforcing rubber layers 10 suppress increase in mass of the tire 1. In addition, the inner end 10i of the reinforcing rubber layer 10 is, for example, located inward of the outer end e1 of each rim flange Rf in the tire radial direction. Thus, the stiffness of the bead portions 4 is maintained at a high level.

The reinforcing rubber layer 10 is, for example, formed of a sheet-shaped rubber member. Such reinforcing rubber layers 10 enhance the stiffness of the bead portions 4 uniformly in the tire radial direction, and inhibit increase in the mass of the tire 1. A thickness (maximum thickness) t1 of each reinforcing rubber layer 10 is preferably 0.5 to 3.0 mm. In addition, for example, a complex elastic modulus E*c of the reinforcing rubber layer 10 is preferably not less than 15 MPa and more preferably not less than 20 MPa, and is preferably not greater than 100 MPa and more preferably not greater than 80 MPa. Thus, the stiffness of the bead portions 4 is maintained at a high level. In the present description, the complex elastic modulus E* is a value measured by using a viscoelasticity spectrometer such as "EPLEXOR (registered trademark)" manufactured by GABO under the following conditions in accordance with JIS K 6394.
Initial strain: 10%
Amplitude: ±2%
Frequency: 10 Hz
Deformation mode: tension
Temperature: 70°C

As shown in FIG. 1, the tire 1 of the present embodiment further includes bead apex rubbers 8, reinforcing layers 15, the sidewall rubbers 3G, and clinch rubbers 4G. For example, the bead apex rubbers 8 are respectively provided at the pair of bead portions 4, and extend outward in the tire radial direction from the outer surfaces 5a in the tire radial direction of the bead cores 5. For example, the reinforcing layers 15 are respectively provided at the pair of bead portions 4, and are each disposed between the bead core 5 and the carcass ply 6A. In the present embodiment, the sidewall rubbers 3G are disposed outward of the turned-up portions 6b in the tire axial direction, and are adjacent to the third portions 13. Each clinch rubber 4G is located outward of the reinforcing rubber layer 10 in the tire axial direction, and forms an outer surface, of the tire 1, in contact with the rim R.

As shown in FIG. 3, each reinforcing layer 15 of the present embodiment includes an inner-side portion 15A and an outer-side portion 15B. The inner-side portion 15A is adjacent to the inner-side surface 5c of each bead core 5, for example. The outer-side portion 15B is connected to the inner-side portion 15A, and is turned up around the bead core 5 from the inner side toward the outer side in a the tire axial direction and extends outward in the tire radial direction, for example.

An outer end 15e of the inner-side portion 15A and an outer end 15i of the outer-side portion 15B are located outward of the outer surface 5a of the bead core 5 in the tire radial direction. In addition, the outer end 15e of the inner-side portion 15A and the outer end 15i of the outer-side portion 15B are located outward of the inner end 10i in the tire radial direction of the reinforcing rubber layer 10, in the tire radial direction. Such reinforcing layers 15 greatly reduce a possibility that each bead core 5 and the carcass ply 6A come into contact with each other. Thus, there is less risk of breaking of the carcass cords 6c of the carcass ply 6A, thereby improving durability. The outer end 15e of the inner-side portion 15A and the outer end 15i of the outer-side portion 15B are located inward of the outer end e1 of the rim flange Rf in the tire radial direction.

The outer end 15e in the tire radial direction of the inner-side portion 15A and the outer end 15i in the tire radial direction of the outer-side portion 15B are at the same position in the tire radial direction. Such reinforcing layers 15 suppress movement of the bead cores 5 or rotation around the shown bead cores 5, thereby further inhibiting contact between the carcass ply 6A and each bead core 5. In the present description, the "same position" refers to not only a case where a separation distance Lt in the tire radial direction between the outer end 15e and the outer end 15i is 0 mm but also a case where the separation distance Lt is not greater than 3 mm.

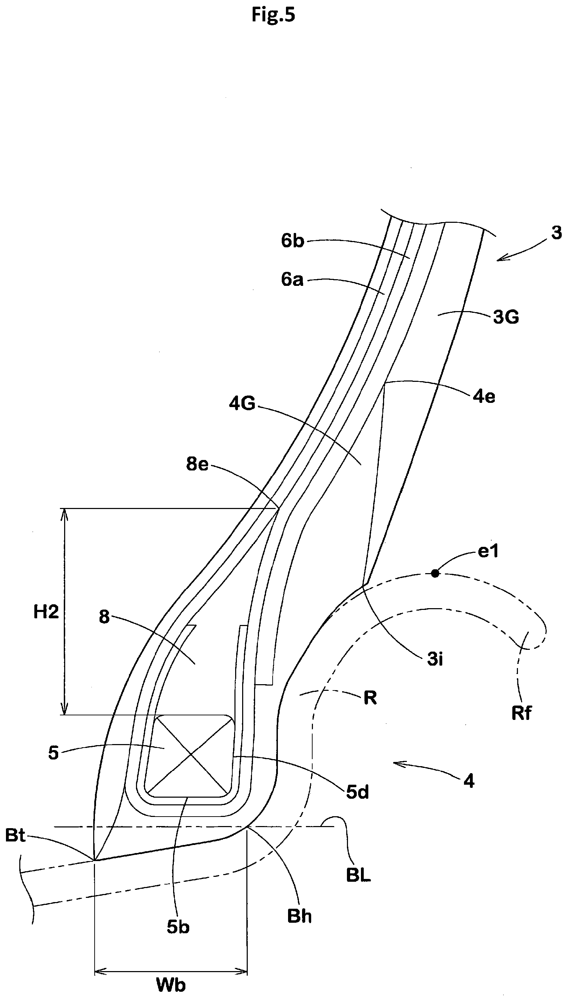

A distance Lp in the tire radial direction between the outer end 15i of the outer-side portion 15B and the outer surface 5a of the bead core 5 is preferably not less than 30% and more preferably not less than 35% of a height H2 (shown in FIG. 5) in the tire radial direction of each bead apex rubber 8, and is preferably not greater than 50% and more preferably not greater than 45% of the height H2 in the tire radial direction of the bead apex rubber 8. Since the distance Lp is not less than 30% of the height H2 of the bead apex rubber 8, contact between the carcass ply 6A and each bead core 5 can be effectively suppressed. Since the distance Lp is not greater than 50% of the height H2 of the bead apex rubber 8, the adhesion strength between each bead apex rubber 8 and the carcass ply 6A is maintained at a high level, thereby inhibiting damage due to separation. The height H2 of the bead apex rubber 8 is a length in the tire radial direction between an outer end 8e of the bead apex rubber 8 and the outer surface 5a of the bead core 5.

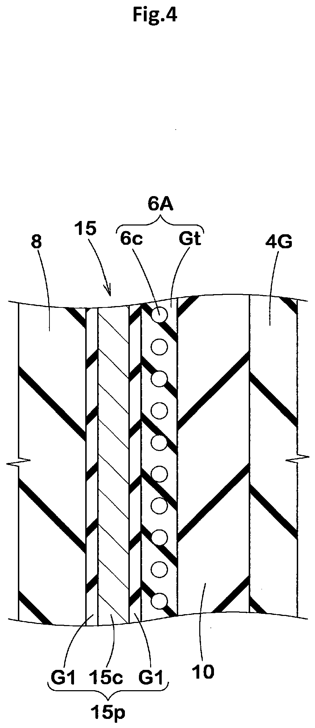

FIG. 4 is a sectional view taken along a line A-A in FIG. 3. As shown in FIG. 4, in the present embodiment, each reinforcing layer 15 is a reinforcing ply 15p including a plurality of organic fiber cords 15c and a first rubber G1 for covering the organic fiber cords 15c. For the organic fiber cords 15c, for example, polyester fibers, nylon fibers, rayon fibers, vinylon fibers, aramid fibers, or polyurethane fibers are used.

A product (Ca×E* 1) of a cord density Ca of the carcass ply 6A and a complex elastic modulus E*1 of the topping rubber Gt is preferably greater than a product (Cb×E*2) of a cord density Cb of the reinforcing ply 15p and a complex elastic modulus E*2 of the first rubber G1. Thus, the reinforcing layer 15 can be accurately disposed along the inner-side surface 5c or the inner surface 5b of each bead core 5, and damage to the carcass ply 6A can be suppressed. The product (Ca×E*1) is, for example, preferably 90000 to 110000 (the number of the cords·MPa). The product (Cb×E*2) is, for example, preferably 15000 to 25000 (the number of the cords·MPa). In the present description, the "cord density" is the number of cords included per ply width of 50 mm in each ply.

FIG. 5 is an enlarged view of the bead portion 4 in FIG. 1. As shown in FIG. 5, each bead apex rubber 8 is inclined outward in the tire axial direction, toward the outer side in the tire radial direction. For the bead apex rubber 8 of the present embodiment, a known bead apex rubber can be used as appropriate.

The outer end 8e in the tire radial direction of the bead apex rubber 8 is, for example, located outward of the outer end e1 of each rim flange Rf in the tire radial direction. Thus, deflection of the bead portions 4 during running is further suppressed, and, for example, separation between the carcass ply 6A and each reinforcing rubber layer 10, separation between the body portion 6a and each turned-up portion 6b, or the like is inhibited, thereby improving durability. In the present embodiment, the bead apex rubber 8 extends inward and outward of the outer end e1 of the rim flange Rf in the tire radial direction.

The height H2 in the tire radial direction of the bead apex rubber 8 is preferably not greater than 30 mm and more preferably not greater than 28 mm. Since the height H2 of the bead apex rubber 8 is not greater than 30 mm, the outer end 8e of the bead apex rubber 8 and a bending point to be generated in the bead portion 4 during running are inhibited from coming excessively close to each other, thereby maintaining durability at a high level. Although not particularly limited, the height H2 of the bead apex rubber 8 is preferably not less than 5 mm and more preferably not less than 10 mm.

In the present embodiment, the inner end 3i in the tire radial direction of each sidewall rubber 3G is located inward of the outer end e1 of the rim flange Rf in the tire radial direction. An outer end 3e (shown in FIG. 1) in the tire radial direction of the sidewall rubber 3G is, for example, located between the inner belt ply 7A and each turned-up portion 6b.

A thickness (maximum thickness) t3 (shown in FIG. 1) of each sidewall rubber 3G is preferably not less than 2.0 mm and more preferably not less than 2.5 mm, and is preferably not greater than 6.0 mm and more preferably not greater than 5.0 mm. Since the thickness t3 of the sidewall rubber 3G is not less than 2.0 mm, the stiffness of the sidewall portion 3 can be enhanced. Since the thickness t3 of the sidewall rubber 3G is not greater than 6.0 mm, weight reduction in the tire 1 can be maintained. The thickness t3 of the sidewall rubber 3G is a length in the direction normal to an outer surface in the tire axial direction of the turned-up portion 6b of the carcass ply 6A.

In the present embodiment, an outer end 4e in the tire radial direction of each clinch rubber 4G is located outward of the outer end 8e of the bead apex rubber 8 in the tire radial direction. The clinch rubber 4G is adjacent to the outer-side surface 5d of each bead core 5 and extends inward of the inner surface 5b of the bead core 5 in the tire radial direction, for example.

A complex elastic modulus E*5 of each bead apex rubber 8 is preferably not less than 15 MPa and more preferably not less than 20 MPa, and is preferably not greater than 100 MPa and more preferably not greater than 80 MPa. In addition, a complex elastic modulus E*6 of each sidewall rubber 3G is preferably not less than 3 MPa and more preferably not less than 5 MPa, and is preferably not greater than 20 MPa and more preferably not greater than 15 MPa. A complex elastic modulus E*7 of each clinch rubber 4G is preferably not less than 5 MPa and more preferably not less than 8 MPa, and is preferably not greater than 20 MPa and more preferably not greater than 15 MPa.

Bead toes Bt are each an innermost contact point with the rim R in the tire axial direction. Bead heels Bh are each a point that is in contact with the rim R and lies on the bead base line BL. A length Wb in the tire axial direction between the bead toe Bt and the bead heel Bh at each of the pair of bead portions 4 is preferably not greater than 16 mm. With such length Wb, rim fittability when the tire 1 is fitted on the rim R is improved. In order to ensure stability during running, the length Wb is preferably not less than 12 mm.

Although the particularly preferred embodiment of the present invention has been described in detail above, the present invention is not limited to the illustrated embodiment, and various modifications can be made within the scope of the appended claims.

### EXAMPLES

Pneumatic tires for passenger cars with a size of 205/85R16 having the basic structure in FIG. 1 were produced as test tires on the basis of specifications in Table 1. Each test tire was tested for weight reduction, rim fittability, and durability. The test method is as follows.

### <Weight reduction>

The mass of each test tire was measured. The result was indicated as an index with the reciprocal of the mass of the tire of Comparative Example 3 being regarded as 100. The higher the numerical value is, the smaller the mass of the tire is and the more favorable the result is.

### <Durability>

Running with each test tire set on a drum tester under the following conditions was performed, and the running distance was measured when carcass cord damage or separation damage occurred. The carcass cord damage means damage caused due to the carcass cord being broken around the bead core. The separation damage means separation between the carcass ply and a constituent material adjacent thereto or separation between the carcass plies. The running distance was evaluated when one of the carcass cord damage or the separation damage occurred. The result was indicated as an index with the running distance of Comparative Example 1 being regarded as 60. A numerical value not less than 90 is acceptable.
Internal pressure: 600 kPa
Load: 19.84 kN
Running speed: 80 km/h

The test results are shown in Table 1 and Table 2.

In Table 1, "Two" indicates an example in which two carcass plies were disposed and the outer ends 6e of the turned-up portions of each carcass ply were located at a tire maximum width position.

In Tables 1 and 2, "A" means "8e>e1>15e, 15i", and "B" means "e1>8e>15e, 15i".

Further, in Tables 1 and 2, "C" means "(Ca×E*1)>(Cb×E*2)", and "D" means "(Ca×E*1)<(Cb×E*2)".

In Tables 1 and 2, "Presence" means that the reinforcing layer was formed of a reinforcing ply, and "Presence*" means that the reinforcing layer was formed of only rubber.

Further, Comparative Example 1 is an example in which the height H2 in the tire radial direction of the bead apex rubber was the same height as that in FIG. 1, and Comparative Example 2 is an example in which the height H2 of the bead apex rubber was set so as to have a durability of 100.

**[Table 1]**

| | Comp. Ex. 1 | Comp. Ex. 2 | Comp. Ex. 3 | Comp. Ex. 4 | Ex. 1 | Ex. 2 | Ex. 3 | Ex. 4 |
|---|---|---|---|---|---|---|---|---|
| Shape of carcass ply | Two | Two | FIG. 1 | FIG. 1 | FIG. 1 | FIG. 1 | FIG. 1 | FIG. 1 |
| Shape of bead portion | no reinforcing rubber layer | no reinforcing rubber layer | FIG. 3 | FIG. 3 | FIG. 3 | FIG. 3 | FIG. 3 | FIG. 3 |
| Presence/absence of reinforcing layer | Absence | Absence | Presence | Presence | Presence | Presence | Presence | Presence |
| Lc/(La+Lb) | - | - | 0.7 | 1.5 | 0.8 | 0.9 | 1.3 | 1.4 |
| Positions of 8e, 15e, e1 | - | - | A | A | A | A | A | A |
| Wa/L1 | - | - | 0.2 | 0.2 | 0.2 | 0.2 | 0.2 | 0.2 |
| Relationship between (Ca×E*1) and (Cb×E*2) | - | - | C | C | C | C | C | C |
| Wb (mm) | 16 | 16 | 16 | 16 | 16 | 16 | 16 | 16 |
| Weight reduction [Index, higher numerical value is better] | 140 | 100 | 120 | 140 | 123 | 125 | 130 | 135 |
| Durability [Index, higher numerical value is better] | 80 | 100 | 88 | 85 | 95 | 100 | 105 | 100 |

**[Table 2]**

| | Ex. 5 | Ex. 6 | Ex. 7 | Ex. 8 | Ex. 9 | Ex. 10 | Ex. 11 |
|---|---|---|---|---|---|---|---|
| Shape of carcass ply | FIG. 1 | FIG. 1 | FIG. 1 | FIG. 1 | FIG. 1 | FIG. 1 | FIG. 1 |
| Shape of bead portion | FIG. 3 | FIG. 3 | FIG. 3 | FIG. 3 | FIG. 3 | FIG. 3 | FIG. 3 |
| Presence/absence of reinforcing layer | Presence | Presence* | Absence | Presence | Presence | Presence | Presence |
| Lc/(La+Lb) | 1.2 | 1.2 | 1.2 | 1.2 | 1.2 | 1.2 | 1.2 |
| Positions of 8e, 15e, e1 | A | A | A | A | B | A | A |
| Wa/L1 | 0.2 | 0.2 | 0.2 | 0.2 | 0.2 | 0.4 | 0.2 |
| Relationship between (Ca×E*1) and (Cb×E*2) | C | C | C | C | C | C | D |
| Wb (mm) | 16 | 16 | 16 | 18 | 16 | 16 | 17 |
| Weight reduction [Index, higher numerical value is better] | 127 | 132 | 135 | 127 | 130 | 135 | 127 |
| Durability [Index, higher numerical value is better] | 110 | 100 | 90 | 105 | 100 | 95 | 105 |

As shown in Tables 1 and 2, it is understood that the weight reduction of the tires of the Examples is maintained and durability thereof is improved as compared to those of the tires of the Comparative Examples.

## Claims

1. A pneumatic tire (1) comprising:
a tread portion (2);
a pair of sidewall portions (3);
a pair of bead portions (4) respectively having bead cores (5);
a carcass (6) extending between the pair of bead portions (4);
a belt layer (7) disposed outward of the carcass (6) in a tire radial direction;
reinforcing rubber layers (10) respectively provided at the pair of bead portions (4); and
clinch rubbers (4G), each clinch rubber (4G) being located outward of the respective reinforcing rubber layer (10) in the tire axial direction, and forming an outer surface of the tire (1) in contact with the rim (R),
wherein
the carcass (6) is a carcass ply (6A) which includes a body portion (6a) extending between the bead cores (5) of the pair of bead portions (4), and a pair of turned-up portions (6b) respectively turned up around the bead cores (5) from an inner side toward an outer side in a tire axial direction, extending outward in the tire radial direction, and having outer ends (6e),
in a tire meridional cross-section in a standardized state where the pneumatic tire (1) is fitted on a standardized rim (R) and inflated to a standardized internal pressure and no load is applied to the pneumatic tire (1), and
each of the pair of turned-up portions (6b) includes a first portion (11) located between the body portion (6a) and the belt layer (7), a second portion (12) adjacent to each reinforcing rubber layer (10) in the tire axial direction, on an outer side in the tire radial direction with respect to a rim flange (Rf) of the standardized rim (R), and a third portion (13) disposed between the first portion (11) and the second portion (12),
**characterized in that**
a length (Lc) of the third portion (13) is 0.8 to 1.4 times a sum of a length (La) of the first portion (11) and a length (Lb) of the second portion (12).

2. The pneumatic tire (1) according to claim 1, wherein a length (Wa) in the tire axial direction between the outer ends (6e) of the pair of turned-up portions (6b) is 0.1 to 0.3 times a length (L1) of the body portion (6a).

3. The pneumatic tire (1) according to claim 1 or 2, wherein each of the pair of bead portions (4) includes a reinforcing layer (15) provided between the bead core (5) and the carcass ply (6A).

4. The pneumatic tire (1) according to claim 3, wherein
each of the pair of bead portions (4) includes a bead apex rubber (8) extending outward in the tire radial direction from an outer surface (5a) in the tire radial direction of the bead core (5), and
in the standardized state,
an outer end (8e) in the tire radial direction of the bead apex rubber (8) and an outer end (10e) in the tire radial direction of the reinforcing rubber layer (10) are located outward of an outer end (e1) in the tire radial direction of the rim flange (Rf) of the standardized rim (R), in the tire radial direction.

5. The pneumatic tire (1) according to claim 3 or 4, wherein
the reinforcing layer (15) includes an inner-side portion (15A) adjacent to an inner-side surface (5c) in the tire axial direction of the bead core (5), and an outer-side portion (15B) which is connected to the inner-side portion (15A) and is turned up around the bead core (5) from the inner side toward the outer side in the tire axial direction and extends outward in the tire radial direction, and
an outer end (15e) in the tire radial direction of the inner-side portion (15A) and an outer end (15i) in the tire radial direction of the outer-side portion (15B) are located at the same position, in the tire radial direction.

6. The pneumatic tire (1) according to claim 5, wherein the outer end (15e) in the tire radial direction of the inner-side portion (15A) and the outer end (15i) in the tire radial direction of the outer-side portion (15B) are located outward of an inner end (10i) in the tire radial direction of the reinforcing rubber layer (10), in the tire radial direction.

7. The pneumatic tire (1) according to any one of claims 3 to 6, wherein the reinforcing layer (15) is a reinforcing ply (15p) including a plurality of organic fiber cords (15c) and a first rubber (G1) for covering the organic fiber cords (15c).

8. The pneumatic tire (1) according to any one of claims 1 to 7, wherein the inner end (10i) in the tire radial direction of the reinforcing rubber layer (10) is located outward of the outer surface (5a) in the tire radial direction of the bead core (5), in the tire radial direction.

9. The pneumatic tire (1) according to claim 7, wherein
the carcass ply (6A) includes a plurality of carcass cords (6c) and a topping rubber (Gt) for covering the carcass cords (6c), and
a product of a cord density (Ca) of the carcass ply (6A) and a complex elastic modulus (E*1) of the topping rubber (Gt) is greater than a product of a cord density (Cb) of the reinforcing ply (15p) and a complex elastic modulus (E*2) of the first rubber (G1), wherein the complex elastic modulus E* is measured in accordance with JIS K 6394 under the conditions of initial strain: 10%, amplitude: ±2%, frequency: 10 Hz, deformation mode: tension and temperature: 70°C.

10. The pneumatic tire (1) according to any one of claims 1 to 9, wherein in each of the pair of bead portions (4), a length (Wb) in the tire axial direction between a bead toe (Bt) and a bead heel (Bh) is not greater than 16 mm.

11. The pneumatic tire (1) according to any one of claims 1 to 10, wherein
a sidewall rubber (3G) is provided adjacent to an outer side in the tire axial direction of the third portion (13), and
a thickness (t3) of the sidewall rubber (3G) is 2.0 to 6.0 mm.

## Patentansprüche

1. Luftreifen (1), umfassend:
einen Laufflächenabschnitt (2);
ein Paar von Seitenwandabschnitten (3);
ein Paar von Wulstabschnitten (4), die jeweils Wulstkerne (5) aufweisen;
eine Karkasse (6), die sich zwischen dem Paar von Wulstabschnitten (4) erstreckt;
eine Gürtellage (7), die in einer Reifenradialrichtung außerhalb der Karkasse (6) angeordnet ist;
Verstärkungsgummilagen (10), die jeweils an dem Paar von Wulstabschnitten (4) vorgesehen sind; und
Clinchgummis (4G), wobei jedes Clinchgummi (4G) in der Reifenaxialrichtung außerhalb der jeweiligen Verstärkungsgummilage (10) angeordnet ist und eine Außenfläche des Reifens (1) in Kontakt mit der Felge (R) bildet,
wobei
die Karkasse (6) eine Karkassenschicht (6A) ist, die einen Körperabschnitt (6a), der sich zwischen den Wulstkernen (5) des Paares von Wulstabschnitten (4) erstreckt, und ein Paar von umgeschlagenen Abschnitten (6b) umfasst, die jeweils um die Wulstkerne (5) herum in einer Reifenaxialrichtung von einer Innenseite in Richtung einer Außenseite umgeschlagen sind, sich in der Reifenradialrichtung nach außen erstrecken und äußere Enden (6e) aufweisen,
in einem Reifen-Meridionalquerschnitt in einem standardisierten Zustand, in welchem der Luftreifen (1) an einer Standardfelge (R) montiert ist und bis zu einem standardisierten Innendruck aufgepumpt ist und keine Last auf den Luftreifen (1) angewendet wird, und
jedes von dem Paar von umgeschlagenen Abschnitten (6b) einen ersten Abschnitt (11), der zwischen dem Körperabschnitt (6a) und der Gürtellage (7) angeordnet ist, einen zweiten Abschnitt (12), der in der Reifenaxialrichtung an die jeweilige Verstärkungsgummilage (10) angrenzt, auf einer Außenseite in der Reifenradialrichtung bezogen auf einen Felgenflansch (Rf) der standardisierten Felge (R) und einen dritten Abschnitt (13) umfasst, der zwischen dem ersten Abschnitt (11) und dem zweiten Abschnitt (12) angeordnet ist,
**dadurch gekennzeichnet, dass**
eine Länge (Lc) des dritten Abschnitts (13) das 0,8- bis 1,4-fache einer Summe einer Länge (La) des ersten Abschnitts (11) und einer Länge (Lb) des zweiten Abschnitts (12) beträgt.

2. Luftreifen (1) nach Anspruch 1, wobei eine Länge (Wa) in der Reifenaxialrichtung zwischen den äußeren Enden (6e) des Paares von umgeschlagenen Abschnitten (6b) das 0,1- bis 0,3-fache einer Länge (L1) des Körperabschnitts (6a) beträgt.

3. Luftreifen (1) nach Anspruch 1 oder 2, wobei jeder von dem Paar von Wulstabschnitten (4) eine Verstärkungslage (15) aufweist, die zwischen dem Wulstkern (5) und der Karkassenschicht (6A) vorgesehen ist.

4. Luftreifen (1) nach Anspruch 3, wobei
jeder von dem Paar von Wulstabschnitten (4) ein Wulstspitzengummi (8) aufweist, das sich in der Reifenradialrichtung von einer Außenfläche (5a) des Wulstkerns (5) in der Reifenradialrichtung nach außen erstreckt, und
in dem standardisierten Zustand
ein äußeres Ende (8e) in der Reifenradialrichtung des Wulstspitzengummis (8) und ein äußeres Ende (10e) in der Reifenradialrichtung der Verstärkungsgummilage (10) in der Reifenradialrichtung außerhalb eines äußeren Endes (e1) des Felgenflanschs (Rf) der standardisierten Felge (R) in der Reifenradialrichtung angeordnet sind.

5. Luftreifen (1) nach Anspruch 3 oder 4, wobei
die Verstärkungslage (15) einen Innenseitenabschnitt (15A), der einer Innenseitenfläche (5c) des Wulstkerns (5) in der Reifenaxialrichtung benachbart ist, und einen Außenseitenabschnitt (15B) umfasst, der mit dem Innenseitenabschnitt (15A) verbunden ist und um den Wulstkern (5) herum in der Reifenaxialrichtung von der Innenseite in Richtung der Außenseite umgeschlagen ist und sich in der Reifenradialrichtung nach außen erstreckt, und
ein äußeres Ende (15e) des Innenseitenabschnitts (15A) in der Reifenradialrichtung und ein äußeres Ende (15i) des Außenseitenabschnitts (15B) in der Reifenradialrichtung an der gleichen Position in der Reifenradialrichtung angeordnet sind.

6. Luftreifen (1) nach Anspruch 5, wobei in der Reifenradialrichtung das äußere Ende (15e) des Innenseitenabschnitts (15A) in der Reifenradialrichtung und das äußere Ende (15i) des Außenseitenabschnitts (15B) in der Reifenradialrichtung außerhalb eines inneren Endes (10i) der Verstärkungsgummilage (10) in der Reifenradialrichtung angeordnet sind.

7. Luftreifen (1) nach einem der Ansprüche 3 bis 6, wobei die Verstärkungslage (15) eine Verstärkungsschicht (15p) ist, die mehrere organische Faserkorde (15c) und ein erstes Gummi (G1) zum Abdecken der organischen Faserkorde (15c) umfasst.

8. Luftreifen (1) nach einem der Ansprüche 1 bis 7, wobei in der Reifenradialrichtung das innere Ende (10i) der Verstärkungsgummilage (10) in der Reifenradialrichtung außerhalb der Außenfläche (5a) des Wulstkerns (5) in der Reifenradialrichtung angeordnet ist.

9. Luftreifen (1) nach Anspruch 7, wobei
die Karkassenschicht (6A) mehrere Karkassenkorde (6c) und ein Deckschichtgummi (Gt) zum Abdecken der Karkassenkorde (6c) umfasst und
ein Produkt einer Korddichte (Ca) der Karkassenschicht (6A) und eines komplexen Elastizitätsmoduls (E*1) des Deckschichtgummis (Gt) größer als ein Produkt einer Korddichte (Cb) der Verstärkungsschicht (15p) und eines komplexen Elastizitätsmoduls (E*2) des ersten Gummis (G1) ist, wobei der komplexe Elastizitätsmodul E* gemäß JIS K 6394 unter den Bedingungen von Anfangsdehnung: 10%, Amplitude: ±2%, Frequenz: 10 Hz, Deformationsmodus: Spannung und Temperatur: 70°C gemessen wird.

10. Luftreifen (1) nach einem der Ansprüche 1 bis 9, wobei in jedem des Paares von Wulstabschnitten (4) eine Länge (Wb) in der Reifenaxialrichtung zwischen einer Wulstspitze (Bt) und einem Wulstabsatz (Bh) nicht größer als 16 mm ist.

11. Luftreifen (1) nach einem der Ansprüche 1 bis 10, wobei
ein Seitenwandgummi (3G) benachbart zu einer Außenseite des dritten Abschnitts (13) in der Reifenaxialrichtung vorgesehen ist und
eine Dicke (t3) des Seitenwandgummis (3G) 2,0 bis 6,0 mm beträgt.

## Revendications

1. Bandage pneumatique (1) comprenant :
une portion formant bande de roulement (2) ;
une paire de portions formant parois latérales (3) ;
une paire de portions de talon (4) ayant respectivement des âmes de talon (5) ;
une carcasse (6) s'étendant entre la paire de portions de talon (4) ;
une couche de ceinture (7) disposée à l'extérieur de la carcasse (6) dans une direction radiale du pneumatique ;
des couches de caoutchouc de renforcement (10) prévues respectivement au niveau de la paire de portions de talon (4) ; et
des caoutchoucs de coiffe de talon (4G), chaque caoutchouc de coiffe de talon (G) étant situé à l'extérieur de la couche de caoutchouc de renforcement respective (10) dans la direction axiale du pneumatique, et formant une surface extérieure du pneumatique (1) en contact avec la jante (R), dans lequel
la carcasse (6) est une nappe de carcasse (6A) qui inclut une portion formant corps (6a) s'étendant entre les âmes de talon (5) de la paire de portions de talon (4), et une paire de portions retroussées (6b) retroussées respectivement autour des âmes de talon (5) depuis un côté intérieur vers un côté extérieur dans une direction axiale du pneumatique, s'étendant vers l'extérieur dans la direction radiale, et ayant des extrémités extérieures (6e),
dans une section transversale méridienne du pneumatique dans un état standardisé dans lequel le bandage pneumatique (1) est monté sur une jante standardisée (R) et est gonflé à une pression interne standardisée, et dans lequel aucune charge n'est appliquée sur le bandage pneumatique (1), et
chacune de la paire de portions retroussées (6b) inclut une première portion (11) située entre la portion formant corps (6a) et la couche de ceinture (7), une deuxième portion (12) adjacente à chaque couche de caoutchouc de renforcement (10) dans la direction axiale du pneumatique, sur un côté extérieur dans la direction radiale du pneumatique par rapport à une bride de jante (Rf) de la jante standardisée (R), et une troisième portion (13) disposée entre la première portion (11) et la deuxième portion (12),
**caractérisé en ce que**
une longueur (Lc) de la troisième portion (13) est 0,8 à 1,4 fois une somme d'une longueur (La) de la première portion (11) et d'une longueur (Lb) de la deuxième portion (12).

2. Bandage pneumatique (1) selon la revendication 1, dans lequel une longueur (Wa) dans la direction axiale du pneumatique entre les extrémités extérieures (6e) de la paire de portions retroussées (6b) est 0,1 à 0,3 fois une longueur (L1) de la portion formant corps (6a).

3. Bandage pneumatique (1) selon la revendication 1 ou 2, dans lequel chacune de la paire de portions de talon (4) inclut une couche de renforcement (15) prévue entre l'âme de talon (5) et la nappe de carcasse (6A).

4. Bandage pneumatique (1) selon la revendication 3, dans lequel
chacune de la paire de portions de talon (4) inclut un caoutchouc de sommet de talon (8) s'étendant vers l'extérieur dans la direction radiale du pneumatique depuis une surface extérieure (5a) dans la direction radiale du pneumatique de l'âme de talon (5), et
dans l'état standardisé,
une extrémité extérieure (8^{e}) dans la direction radiale du pneumatique du caoutchouc de sommet de talon (8) et une extrémité extérieure (10e) dans la direction radiale du pneumatique de la couche de caoutchouc de renforcement (10) sont situées à l'extérieur d'une extrémité extérieure (e1) dans la direction radiale du pneumatique de la bride de jante (Rf) de la jante standardisée (R), dans la direction radiale du pneumatique.

5. Bandage pneumatique (1) selon la revendication 3 ou 4, dans lequel
la couche de renforcement (15) inclut une portion côté intérieur (15A) adjacente à une surface côté intérieur (5c) dans la direction axiale du pneumatique de l'âme de talon (5), et une portion côté extérieur (15B) qui est connectée à la portion côté intérieur (15A) et qui est retroussée autour de l'âme de talon (5) depuis le côté intérieur vers le côté extérieur dans la direction axiale du pneumatique et qui s'étend vers l'extérieur dans la direction radiale du pneumatique, et
une extrémité extérieure (15e) dans la direction radiale du pneumatique de la portion côté intérieur (15A) et une extrémité extérieure (15i) dans la direction radiale du pneumatique de la portion côté extérieur (15B) sont situées à la même position, dans la direction radiale du pneumatique.

6. Bandage pneumatique (1) selon la revendication 5, dans lequel l'extrémité extérieure (15e) dans la direction radiale du pneumatique de la portion côté intérieur (15A) et l'extrémité extérieure (15i) dans la direction radiale du pneumatique de la portion côté extérieur (15B) sont situées à l'extérieur d'une extrémité intérieure (10i) dans la direction radiale du pneumatique de la couche de caoutchouc de renforcement (10), dans la direction radiale du pneumatique.

7. Bandage pneumatique (1) selon l'une quelconque des revendications 3 à 6, dans lequel la couche de renforcement (15) est une nappe de renforcement (15p) incluant une pluralité de câblés de fibres organiques (15c) et un premier caoutchouc (G1) destiné à recouvrir les câblés de fibres organiques (15c).

8. Bandage pneumatique (1) selon l'une quelconque des revendications 1 à 7, dans lequel l'extrémité intérieure (10i) dans la direction radiale du pneumatique de la couche de caoutchouc de renforcement (10) est située à l'extérieur de la surface extérieure (5a) dans la direction radiale du pneumatique de l'âme de talon (5), dans la direction radiale du pneumatique.

9. Bandage pneumatique (1) selon la revendication 7, dans lequel
la nappe de carcasse (6A) inclut une pluralité de câblés de carcasse (6c) et un caoutchouc d'enrobage (Gt) destiné à recouvrir les câblés de carcasse (6c), et
un produit d'une densité de câblés (Ca) de la nappe de carcasse (6A) et d'un module d'élasticité complexe (E*1) du caoutchouc d'enrobage (Gt) est supérieur à un produit d'une densité de câblés (Cb) de la nappe de renforcement (15p) et d'un module d'élasticité complexe (E*2) du premier caoutchouc (G1), le module d'élasticité complexe E* étant mesuré selon la norme industrielle japonaise JIS K 6394 dans les conditions suivantes : contrainte initiale de 10 %, amplitude de ± 2 %, fréquence de 10 Hz, mode de déformation en traction, et température de 70 °C.

10. Bandage pneumatique (1) selon l'une quelconque des revendications 1 à 9, dans lequel
dans chacune de la paire de portions de talon (4), une longueur (Wb) dans la direction axiale du pneumatique entre un avant de talon (Bt) et un arrière de talon (Bt) n'est pas supérieure à 16 mm.

11. Bandage pneumatique (1) selon l'une quelconque des revendications 1 à 10, dans lequel
un caoutchouc de paroi latérale (3G) est prévu de manière adjacente à un côté extérieur dans la direction axiale du pneumatique de la troisième portion (13), et
une épaisseur (t3) du caoutchouc de paroi latérale (3G) est de 2,0 à 6,0 mm.
